# EUROPEAN PATENT APPLICATION

(11) **EP 3 594 538 A1**
(43) Date of publication of application: **15.01.2020**
(21) Application number: 18764011.5
(22) Date of filing: 19.02.2018
(51) Int. Cl.: F16J 15/3272, F16J 15/18

(54) **SEAL RING**

(30) Priority: 10.03.2017 JP 2017045683
(71) Applicant: NOK Corporation, Tokyo 105-8585 (JP)
(72) Inventor: SAKUMA Katsuyoshi, Kitaibaraki-shi Ibaraki 319-1535 (JP)
(74) Representative: TBK
(86) International application number: PCT/JP2018/005694
(87) International publication number: WO 2018/163770

(57) **Abstract**

Provided is a seal ring (11) in which a ring body (11) configured to be mounted in a mounting groove (22) provided in one of two members, for example, a rotary shaft (21) and a housing (31), that are configured to be assembled together so as to be relatively displaceable with respect to each other, is provided with a contact portion (12) that comes in contact with the other of the two members, and a cut portion (14) separating the ring body (11) at one position on the circumference of the ring body (11). In order to eliminate undercorrection of shape that occurs at a portion in the vicinity of the cut portion (14), thereby reducing the size of a gap that is formed between the seal ring (11) and the mating component when the seal ring (11) is mounted, a thinned structure (15) is provided only at a portion in the vicinity of the cut portion (14) in an outer surface of the ring body (11) other than the contact portion (12).

## Description

### Technical Field

The present invention relates to a seal ring.

### Background Art

As a rotary seal ring for use in AT, CVT, or the like, a seal ring formed using PEEK, which is a material for injection molding, and provided with a cut portion separating the seal ring at one position on the circumference is generally used.

In recent years, the automobile industry has accelerated the development of fuel-efficient vehicles in the background of environmental issues and so on. With an increase in demand for stop-start systems as a part thereof, there is an increasing need for low leakage.

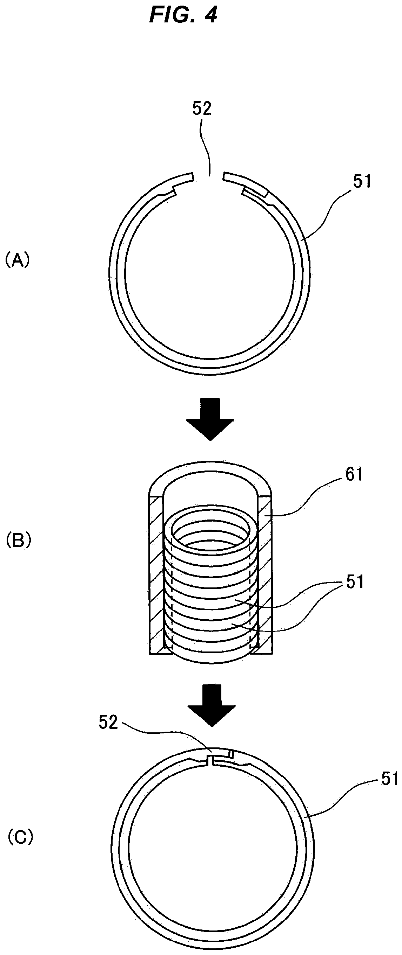

When forming a seal ring 51 by injection molding, there is a method where, as illustrated in FIG. 4(A), a cut portion 52 is formed in a state of being opened in the seal ring circumferential direction (a state where the seal ring 51 is increased in diameter), and then, as illustrated (B) and (C) in FIG. 4, the seal ring 51 is corrected (reduced in diameter) so as to close the cut portion 52 in a post-process. Reference numeral 61 denotes a cylindrical correction jig having a predetermined inner diameter for correcting the seal ring 51.

### Prior Art Documents

### Patent Documents

Patent Document 1: Japanese Unexamined Patent Publication No. 2009-126165
Patent Document 2: Japanese Unexamined Patent Publication No. 2009-228742
Patent Document 3: Japanese Patent No. 5088075

### Summary of the Invention

### Problem to be Solved by the Invention

However, when the above-described method is employed, since a portion in the vicinity of the cut portion 52 is difficult to deform in the seal ring 51 made of a hard resin, undercorrection occurs in the post-process after the formation. The undercorrection becomes a main factor to reduce the roundness of the seal ring 51.

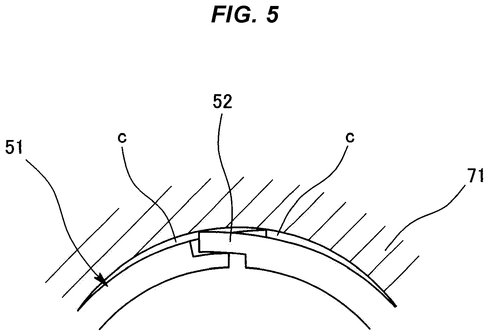

As a result, as illustrated in FIG. 5, when the seal ring 51 is mounted to a mounting portion and comes in contact with a mating component 71 such as, for example, a housing, a radial gap c is formed between the portion, in the vicinity of the cut portion 52, of the seal ring 51 and the mating component 71. The gap c causes leakage. While the seal ring 51 applied with oil pressure deforms so that the gap c is reduced, the gap c is not completely eliminated. In particular, when the seal ring is formed using PEEK, since PEEK is a hard resin, it is difficult to completely eliminate the gap c.

The applicant of this application has proposed the invention described in Patent Document 3. In this invention, in order to reduce the resilience of a seal ring, radial thin portions of which the thickness in the radial direction is thin are provided at a plurality of positions (13 positions in FIG. 9 of the publication) on the circumference of the seal ring. The radial thin portions cause the seal ring to be easily deformed.

However, since the radial thin portions of the invention described in Patent Document 3 cause the entire seal ring to be easily deformed uniformly, the radial thin portions do not sufficiently perform correction aiming only for a portion in the vicinity of a cut portion.

It is an object of the present invention to provide a seal ring that can eliminate undercorrection of shape that occurs at a portion in the vicinity of a cut portion, thereby reducing the size of a gap that is formed between the seal ring and a mating component when the seal ring is mounted.

### Means for Solving the Problem

The present invention includes: a ring body configured to be mounted in a mounting groove provided in one of two members that are configured to be assembled together so as to be relatively displaceable with respect to each other; a contact portion provided to the ring body and configured to contact the other of the two members; a cut portion separating the ring body at one position on the circumference of the ring body; and a thinned structure provided only at a portion in the vicinity of the cut portion in an outer surface of the ring body other than the contact portion.

### Effect of the Invention

According to the present invention, since undercorrection of shape that occurs at the portion in the vicinity of the cut portion is eliminated by the thinned structure, it is possible to reduce the size of a gap that is formed between the seal ring and the mating component when the seal ring is mounted.

### Brief Description of Drawings

[FIG. 1] is a front view illustrating a seal ring of one embodiment.
[FIG. 2] is a longitudinal sectional side view illustrating a mounting state of the seal ring.
[FIG. 3] is an explanatory diagram illustrating the mounting state of the seal ring.
[FIG. 4] is an explanatory diagram illustrating a manufacturing method of a seal ring as a background art.
[FIG. 5] is an explanatory diagram illustrating a mounting state of the seal ring according to the background art.

### Description of Embodiments

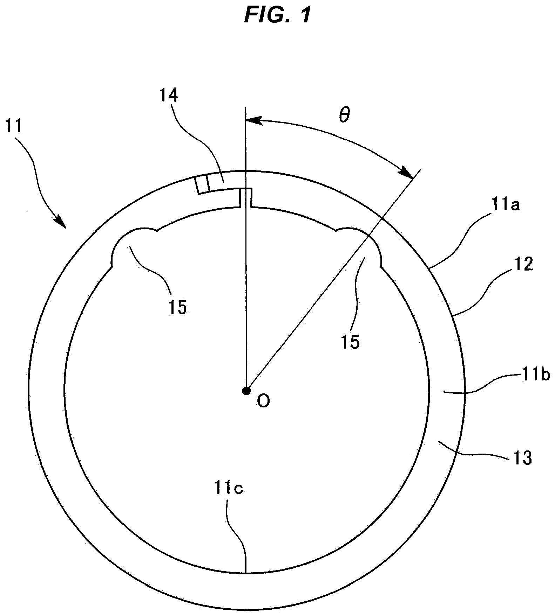

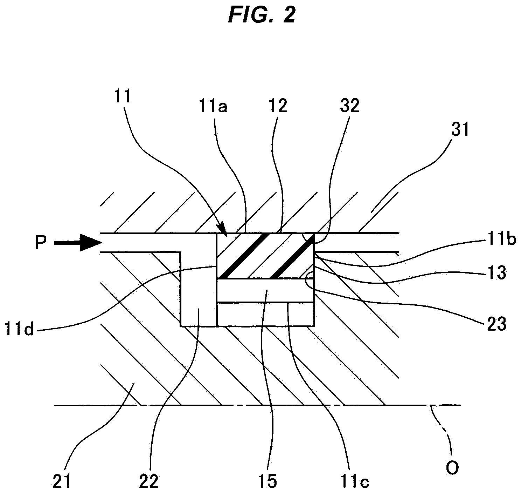

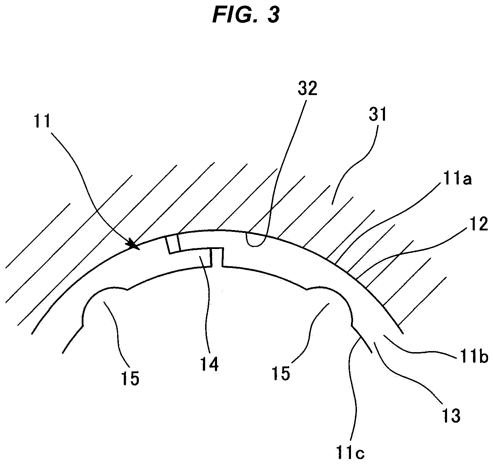

FIG. 1 illustrates the front shape of a seal ring 11 of one embodiment. FIG. 2 illustrates a half section, wherein the state where the seal ring 11 is mounted to a mounting portion is cut along a cutting plane including a central axis O. FIG. 3 illustrates the front of the main part, wherein the state where the seal ring 11 is mounted to the mounting portion is viewed from the central axis direction.

The seal ring 11 is mounted in a mounting groove provided in one of two members that are assembled together so as to be relatively displaceable with respect to each other, and includes a contact portion that comes in contact with the other of the two members. The one of the members is a rotary shaft 21 by way of example, and the other of the members is, by way of example, a housing 31 in which the rotary shaft 21 is inserted through its shaft hole. In the case of this example, the seal ring 11 is mounted in an annular mounting groove 22 provided in an outer peripheral surface of the rotary shaft 21 and includes a contact portion 12 that comes in contact with a shaft hole inner peripheral surface 32 of the housing 31. The seal ring 11 has an outer diameter greater than an inner diameter of the shaft hole inner peripheral surface 32 in this state and is held in the shaft hole of the housing 31 in a state of being reduced in diameter. Therefore, the seal ring 11 presses the contact portion 12 against the shaft hole inner peripheral surface 32 by its elastic resilience to provide a sealing action.

The seal ring 11 is formed as a ring body having a rectangular shape in section, using a resin material such as PEEK (polyetheretherketone resin). In a state of being mounted in the annular mounting groove 22 having a rectangular shape in section likewise, the seal ring 11 is in contact with the shaft hole inner peripheral surface 32 of the housing 31. Therefore, the seal ring 11 provides a sealing action against a sealed fluid by using its cylindrical outer peripheral surface 11a as the contact portion 12 that comes in contact with the shaft hole inner peripheral surface 32 of the housing 31, and contacting the contact portion 12 with the shaft hole inner peripheral surface 32 of the housing 31.

Since the seal ring 11 contacts its one end face 11b in the axial direction with one side surface 23 of the mounting groove 22, the end face 11b serves as an end face contact portion 13. By the contact of the end face contact portion 13 with the one side surface 23 of the mounting groove 22, the seal ring 11 provides a sealing action against the sealed fluid.

The seal ring 11 includes a cut portion 14 that is separated at one position on the circumference of the seal ring 11. In this embodiment, a special step cut in which the seal ring 11 is cut into a two-step shape is employed as the shape and manner of the cut portion 14. However, not limited thereto in implementation, i.e. a cut portion of another shape and manner may be employed, such as a normal-type step cut in which the seal ring 11 is cut into a one-step shape, a straight cut in which the seal ring 11 is cut straight, or a bias cut in which the seal ring 11 is cut diagonally.

The seal ring 11 is formed by injection molding. In the sequence thereof, in this embodiment, the cut portion 14 is formed in a state of being opened in the seal ring circumferential direction (a state where the seal ring 11 is increased in diameter), and then in a post-process, the seal ring 11 is corrected (reduced in diameter) so as to close the cut portion 14. In this event, since the seal ring 11 is made of the hard resin, a portion in the vicinity of the cut portion 14 is difficult to deform and thus tends to be undercorrected. The undercorrection reduces the roundness of the seal ring 11.

In this embodiment, a thinned structure 15 is provided at a portion in the vicinity of the cut portion 14 in an outer surface of the seal ring 11 other than the contact portion 12. The thinned structure 15 is provided in a hollow shape or a recessed shape in an inner peripheral surface 11c of the seal ring 11 at the portion in the vicinity of the cut portion 14. Therefore, the radial width of the seal ring 11 on the circumference where the thinned structure 15 is provided is smaller than that of the other portion. Since the portion in the vicinity of the cut portion 14 ranges on both sides of the cut portion 14 in the circumferential direction, the thinned structure 15 is provided at one position on each of both sides of the cut portion 14 in the circumferential direction.

The thinned structure 15 is provided only at the portion in the vicinity of the cut portion 14 in the outer surface of the seal ring 11 other than the contact portion 12. In this embodiment, the portion in the vicinity of the cut portion 14 is a region within a range of an angle θ of 10 to 60 degrees from a central portion or an end portion of the cut portion 14 on the circumference of the seal ring 11. Since the vicinity portion ranges on both sides of the cut portion 14, the region within the range of the angle θ extends from the central portion of the cut portion 14 to both sides thereof. Therefore, a region within a range of an angle twice the angle θ, i.e. a range of an angle of 20 degrees to 60 degrees including the cut portion 14 at the central position, is a vicinity position. The thinned structure 15 is provided only in the region of the angle twice the angle θ. Therefore, the thinned structure 15 is not provided at a portion other than the portion in the vicinity of the cut portion 14 (a portion outside the region of the angle θ), and therefore, at this portion, the inner peripheral surface 11c of the seal ring 11 is kept to be a cylindrical surface.

The thinned structure 15 passes through the seal ring 11 in the axial direction and is opened at axial direction both end faces 11b, 11d of the seal ring 11. Therefore, the thinned structure 15 makes the radial width of the seal ring 11 smaller and thus reduces the rigidity of the seal ring 11.

In the seal ring 11 configured as described above, the thinned structure 15 is provided only in the inner peripheral surface 11c at the portion in the vicinity of the cut portion 14 in the outer surface of the seal ring 11 other than the contact portion 12. Consequently, the rigidity of the portion in the vicinity of the cut portion 14 is made smaller than the rigidity of the other portion so that the portion in the vicinity of the cut portion 14 tends to deform in the radial direction.

Therefore, the seal ring 11 of this embodiment makes it possible to correct the entire seal ring 11 in the post-process after the formation, thereby improving the roundness of the seal ring 11. Consequently, with the seal ring 11, it is possible to reduce the size of a gap or eliminate a gap that is formed between the seal ring 11 and the housing 31 when the seal ring 11 is mounted.

Since the seal ring 11 is reduced in rigidity at its portion corresponding to the thinned structure 15 and thus tends to deform when the oil pressure P is applied, it is also possible to reduce the size of a gap once formed.

Since the shape and size of the thinned structure 15, the number of the thinned structures 15 to be formed, and so on are determined based on the rigidity of the seal ring 11 and so on, there is no particular limitation thereto in the present invention.

In implementation, various modifications or changes are permitted.

For example, in the above-described embodiment, the example is given where one of the members is the rotary shaft 21 and the other of the members is the housing 31, and the structure in which the contact portion 12 is provided to the outer peripheral surface of the seal ring 11 is given by way of example. On the other hand, the one member and the other member are not limited to the rotary shaft 21 and the housing 31 and may be other members. Further, the contact portion 12 may be provided to the inner peripheral surface of the seal ring 11. In this case, when applied to the example where the one member is the rotary shaft 21 and the other member is the housing 31, the contact portion 12 comes in contact with the rotary shaft 21.

The present invention is not limited to the above-described embodiment and mode, and various modifications or changes are made possible.

### Description of Reference Numerals

- 11: seal ring
- 11a: outer peripheral surface
- 11b, 11d: axial direction end face
- 11c: inner peripheral surface
- 12: contact portion
- 13: end face contact portion
- 14: cut portion
- 15: thinned structure
- 21: rotary shaft (one of members)
- 22: mounting groove
- 23: side surface
- 31: housing (the other of the members)
- 32: shaft hole inner peripheral surface

## Claims

1. A seal ring comprising:
a ring body configured to be mounted in a mounting groove provided in one of two members that are configured to be assembled together so as to be relatively displaceable with respect to each other;
a contact portion provided to the ring body and configured to contact the other of the two members;
a cut portion separating the ring body at one position on a circumference of the ring body; and
a thinned structure provided only at a portion in a vicinity of the cut portion in an outer surface of the ring body other than the contact portion.

2. The seal ring according to claim 1, wherein the portion in the vicinity of the cut portion is a region within an angular range of 10 to 60 degrees from the cut portion on the circumference of the ring body.

3. The seal ring according to claim 1 or 2, wherein the ring body is formed using a resin material.

4. The seal ring according to claim 3, wherein the ring body is formed in a state where the cut portion is opened in a circumferential direction of the ring body.

5. The seal ring according to claim 4, wherein the thinned structure is provided in an inner peripheral surface of the ring body.

6. The seal ring according to any one of claims 1 to 5, wherein the thinned structure passes through the seal ring in an axial direction and is opened at axial direction both end faces.

7. The seal ring according to any one of claims 1 to 6, wherein the thinned structure is provided on each of both sides of the cut portion in a circumferential direction of the cut portion.
